# FASCICULE DE BREVET EUROPEEN

(11) **EP 0 790 399 B1**
(45) Date de publication et mention de la délivrance du brevet: **04.04.2001**
(21) Numéro de dépôt: 97400320.4
(22) Date de dépôt: 13.02.1997
(51) Int. Cl.: F02K 1/70

(54) **Inverseur de poussée de turboréacteur à portes associees a un panneau amont**
Schubumkehrvorrichtung für ein Strahltriebwerk mit an der Vorseite der Hauptklappen verbundenen Hilfsklappen
Thrust reverser for a jet engine with doors linked to a front panel

(30) Priorité: 15.02.1996 FR 9601848
(43) Date de publication de la demande: 20.08.1997
(73) Titulaire: Hispano-Suiza Aérostructures, 76700 Gonfreville l'Orcher (FR)
(72) Inventeur: Jean, Michel Christian Marie, 76700 Harfleur (FR)
(74) Mandataire: Berrou, Paul

(56) Documents cités:
- US-A- 4 407 120
- US-A- 5 209 057

## Description

La présente invention concerne un inverseur de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Dans les applications visées par l'invention, l'inversion de poussée met en oeuvre principalement ou uniquement la déviation du flux secondaire froid.

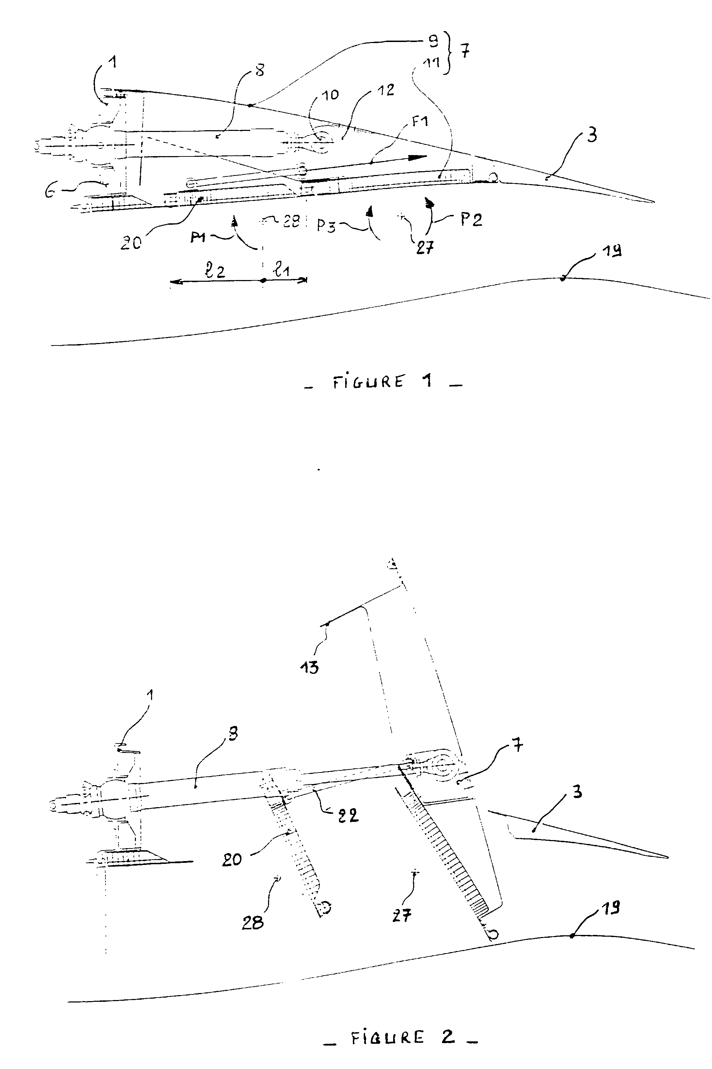

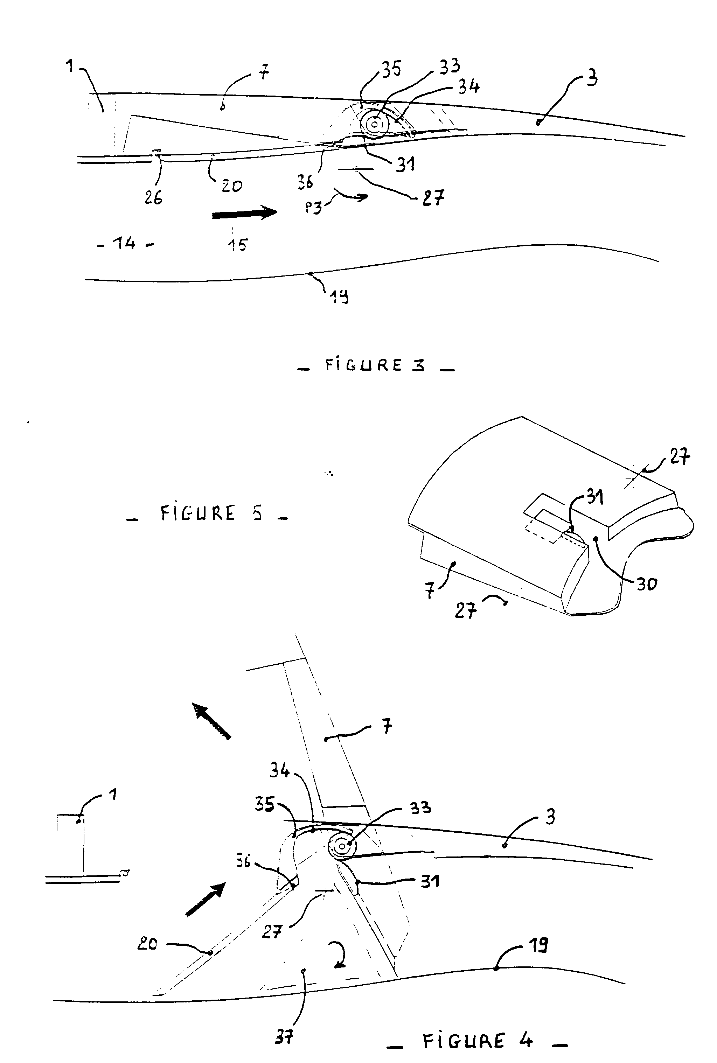

On connaît par EP-A-0413635 un inverseur de poussée de turboréacteur à double flux qui a été schématiquement représenté sur les figures 1 et 2 des dessins joints. De manière ainsi connue, ce type d'inverseur de poussée comporte des portes 7 formant une partie mobile 2 et constituant en position inactive, lors d'un fonctionnement en jet direct, une partie de paroi extérieure de nacelle ou capotage extérieur et une structure fixe réalisant ce capotage extérieur en amont des portes, par une partie amont 1, en aval des portes, par une partie aval 3 et entre les portes 7 par l'intermédiaire de poutres reliant partie amont 1 et partie aval 3. Les portes 7 sont montées sur une circonférence du capotage extérieur et sont montées pivotantes dans une zone intermédiaire de leurs parois latérales sur lesdites poutres situées de part et d'autre des portes. Chaque porte 7 comporte une partie extérieure 9 formant une partie de la paroi extérieure de la nacelle et une partie intérieure 11 formant une partie de la paroi extérieure du conduit annulaire, ces parties étant reliées par les parois latérales et les parois amont et aval de la porte.La partie amont 1 de structure fixe comporte un cadre avant 6 qui sert de support aux moyens de commande des déplacements des portes 7 constitués dans l'exemple de réalisation représenté sur les dessins par des vérins 8 dont l'extrémité de tige est articulée en 10 sur la structure interne 12 de la porte 7. La partie amont de chaque porte 7 est doublée sur sa face interne par un panneau amont interne 20 relié à la porte 7 par au moins une biellette 22 et susceptible de pivoter par entraînement de la porte autour de pivots latéraux indépendants 28, lors du passage de la position de jet direct représentée sur la figure 1 à la position de jet inversé représentée sur la figure 2. Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée. Comme exposé par EP-A-0.413.635 ce dispositif connu permet essentiellement d'améliorer les performances en jet direct grâce à une paroi de veine secondaire lisse, confondue avec les lignes aérodynamiques optimales et ne présentant pas de cavité préjudiciable et également d'obtenir que les efforts exercés sur l'ensemble de porte munie du panneau amont sous l'effet de la pression dans la veine tendent à l'auto-fermeture de l'ensemble en jet direct en assurant une position non-déployée stable.

Dans certaines applications particulières toutefois, les résultats précédemment obtenus grâce aux dispositions connues antérieures peuvent être remise en cause. Ainsi, dans certaines configurations de lignes aérodynamiques, notamment pour une faible hauteur de veine, la pression de veine qui s'exerce sur le panneau amont 20 tend à le faire ouvrir. En effet, les contraintes de cinématique peuvent imposer une position du pivot 28 en arrière du panneau amont 20 telle que la longueur aval 11 est inférieure à la longueur amont 12. Le couple induit symbolisé par la flèche P1 est transmis à la porte 7 via la biellette de liaison 22 exerçant ainsi une action symbolisée par la flèche F1. Même si l'action de la pression de veine sur la porte 7 symbolisée par la flèche P2 tend à l'auto-fermeture, il peut ainsi résulter un couple symbolisé par la flèche P3 qui a un effet d'auto-ouverture sur l'ensemble porte 7 munie de son panneau amont 20. De ce fait les risques de déploiement intempestif ne sont pas suffisamment maîtrisés.

En outre, comme cela est visible sur la figure 2, une découpe dans le panneau amont 20 peut être nécessaire pour éviter l'interférence entre ledit panneau 20 et le corps du vérin 8 dans la position de jet inversé. Cette découpe qui peut être grande entraîne les inconvénients d'un affaiblissement structural du panneau amont 20, de difficultés pour réaliser l'étanchéité en jet direct et d'une réduction de la surface traitée acoustique.

Un inverseur de poussée à portes pivotantes du type précité répondant à ces conditions en évitant les inconvénients des réalisations connues antérieures est caractérisé en ce que le panneau amont est articulé sur le même pivot que la porte, porté par la structure fixe de l'inverseur et les moyens de liaison entre ladite porte et ledit panneau amont comportent un ensemble à train d'engrenage épicycloïdal composé d'un élément denté solidaire de la porte, constituant le planétaire, d'une couronne dentée extérieure, solidaire du panneau amont et d'au moins un pignon libre en rotation, solidaire de la structure fixe de l'inverseur et constituant le satellite entre le planétaire et la couronne extérieure de manière que lors du passage de la position de jet direct à la position de jet inversé, la rotation de la porte et du panneau amont respectivement autour au pivot commun et sous l'action du moyen de commande des déplacements se fait dans des sens opposés. Avantageusement la commande des déplacements de la porte et du panneau amont peut être obtenue au moyen d'un actionneur rotatif directement lié au pignon de liaison entre la porte et le panneau amont. En fonction des applications particulières la commande par un actionneur linéaire du type vérin hydraulique disposé entre la structure fixe de l'inverseur et la porte reste toutefois possible.

Suivant une variante de réalisation, les moyens de liaison à engrenage épicycloïdal entre la porte et le panneau amont peuvent être montés directement sur l'axe de pivot commun à la porte et au panneau amont.

D'autre caractéristiques et avantages de l'invention seront mieux compris à la lecture de la description qui va suivre d'un mode de réalisation de l'invention, en référence aux dessins annexés sur lesquels :
- les figures 1 et 2 qui ont précédemment fait l'objet d'une description représentant une demi-vue schématique, en coupe longitudinale par un plan passant par l'axe de rotation d'un turboréacteur associé, d'un inverseur de poussée à portes pivotantes munies d'un panneau amont, d'un type connu et respectivement en position de jet direct et en position de jet inversé ;
- la figure 3 représente, selon une vue analogue à celle de la figure 1 un inverseur de poussée à portes pivotantes, en position de jet direct et conforme à un mode de réalisation de l'invention ;
- la figure 4 représente, selon une vue analogue à celle de la figure 2, l'inverseur de poussée représenté sur la figure 3 , dans une position d'inversion de poussée ;
- la figure 5 représente, selon une vue schématique en perspective, un détail de réalisation de la porte de l'inverseur conforme à l'invention représenté sur les figures 3 et 4 ;
- la figure 6 représente, selon une vue schématique en perspective, un détail de réalisation de la structure fixe de l'inverseur conforme à l'invention, représenté sur les figures 3 et 4 ;
- la figure 7 représente selon une demi-vue schématique en coupe analogue à celle des figures 3 et 4, l'inverseur de poussée représenté sur les figures 3 et 4, en position de demi-ouverture ;
- la figure 8 représente in détail de position du joint de panneau amont, selon une vue analogue à celle de la figure 3 ;
- la figure 9 représente, selon une vue analogue à celle de la figure 4 un inverseur de poussée conforme à l'invention comportant une variante de réalisation des moyens de liaison entre la porte et le panneau amont ;
- la figure 10 montre un détail agrandi de la figure 9 représentant la réalisation des moyens de liaison entre la porte et le panneau amont ;
- la figure 11 montre la disposition des éléments de l'inverseur de poussée représenté sur la figure 9 selon une vue partielle schématique en section transversale, dans une position de jet direct.

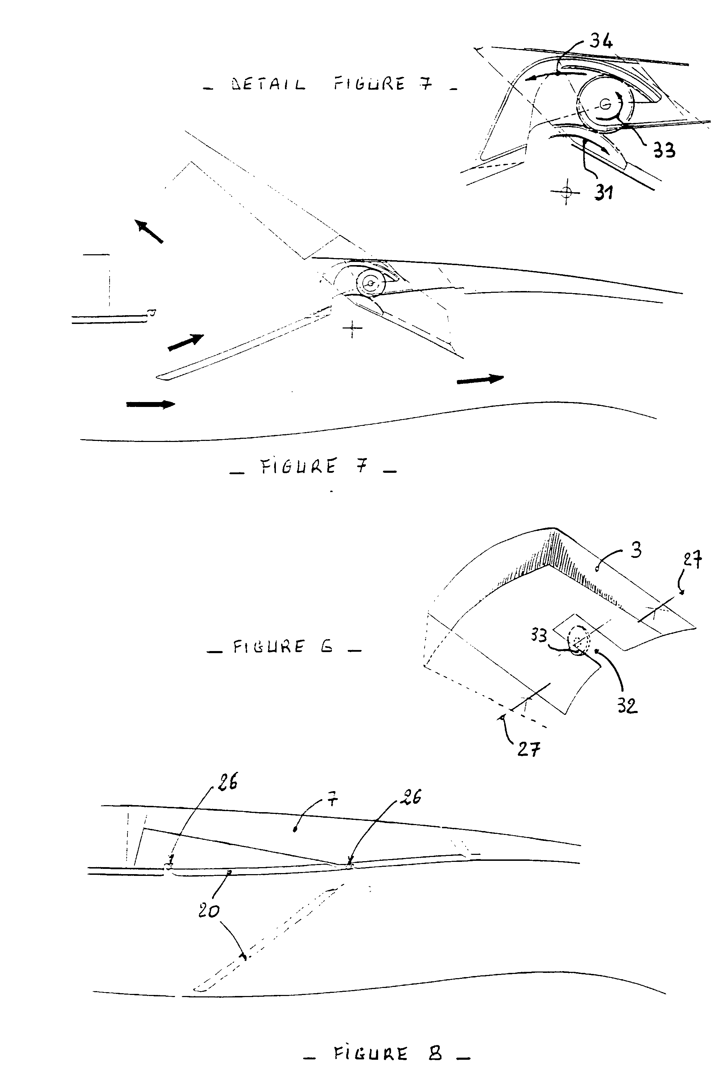

Selon un mode de réalisation de l'invention représenté sur les figures 3 et 4, un inverseur de poussée susceptible d'effectuer lors des phases de vol pertinentes d'un avion une inversion du flux secondaire d'un turboréacteur associé à double flux comporte les parties principales connues et précédemment décrites dans un exemple connu de réalisation en référence aux figures 1 et 2. On retrouve notamment la structure fixe amont 1, les portes 7 et la partie fixe aval 3, on retrouve également un capot primaire 19 enveloppant le turboréacteur et formant la paroi intérieure du conduit annulaire 14 canalisant le flux secondaire symbolisé par la flèche 15. De même chaque porte 7 est associée à un panneau amont 20. Toutefois, de manière remarquable et conforme à l'invention, le panneau amont 20 est supporté de manière articulée par le pivot 27 de la porte 7. Conformément à l'invention, des moyens remarquables de liaison sont disposés entre la porte 7 et le panneau amont 20 associé. En effet, comme visible sur la figure 5, un logement 30 est ménagé sur la porte 7 et sur le bord du logement 30 est monté un secteur denté 31 solidaire de la porte 7. Comme visible sur la figure 6, la structure fixe 3 d'inverseur porte un bras support 32 coopérant avec ledit logement 30. Sur ledit bras support 32 est monté un pignon libre 33 destiné à coopérer d'une part avec le secteur denté 31 de porte et d'autre part avec une couronne dentée 34 ménagée sur un support 35 solidaire de l'extrémité aval 36 du panneau amont 20. Cet ensemble constituant les moyens de liaison entre la porte 7 et le panneau amont 20 forme ainsi un train d'engrenage épicycloïdal, ledit secteur denté 31 de porte constitue le planétaire, le pignon 33 constitue le satellite et la couronne dentée 34 du panneau constitue la couronne extérieure.

Lors du fonctionnement en jet direct, correspondant à la position fermée de la porte 7, représentée sur la figure 3, un dispositif connu en soi et non représenté sur les dessins tel qu'un verrou hydraulique assure le verrouillage de la porte 7 sur le cadre avant 6 de structure fixe amont de l'inverseur. Comme il est précédemment connu dans les réalisations antérieures, la porte 7 constitue une partie des surfaces extérieures de nacelle et la partie interne de la porte 7 constitue une partie de la paroi radialement extérieure du canal annulaire de circulation de la veine de flux secondaire ou flux froid, symbolisé par la flèche 15. La paroi radialement intérieure du panneau amont 20 constitue également une partie de ladite paroi de canal annulaire. Dans cette configuration, la porte 7 étant verrouillée, le pignon 33 est également immobilisé et maintient le panneau amont 20.

La porte 7 est associée à un moyen de commande des déplacements connu en soi et non représenté sur les dessins. Ledit moyen peut par exemple être constitué par un actionneur linéaire tel qu'un vérin hydraulique comme le vérin 8 représenté sur les figures 1 et 2 correspondant à une réalisation antérieure connue. Pour passer de la position de jet direct représentée sur la figure 3 à la position de jet inversé représentée sur la figure 4, ledit moyen de commande fait pivoter la porte 7 dans un sens d'horloge dans la vue représentée tandis que le panneau amont 20 pivote dans un sens inverse à l'horloge par l'intermédiaire du pignon 33. Plusieurs pignons libres en rotation tels que 33 et disposés comme précédemment décrit peuvent être utilisés pour assurer la liaison entre la panneau amont 20 et la porte 7.

En fin d'ouverture, le moyen de commande vient en butée et détermine la position précise de la porte 7 et du panneau amont 20. Comme cela est visible sur la figure 4, les fuites aérodynamiques sont contrôlées par la partie arrière de la porte 7 qui épouse la forme du capot primaire 19 et dans cette position de jet inversé, correspondant au fonctionnement en inversion de poussée, le flux est guidé par le panneau amont 20 puis rejeté vers l'avant grâce au becquet 13 de la porte 7.

Tout en conservant les avantages des solutions connues antérieures telles que précédemment décrites en référence aux figures 1 et 2 et par EP-A-0.413.635, notamment l'absence de cavité et l'obtention d'une paroi de veine à ligne aérodynamique continue ou veine lisse, des avantages complémentaires sont obtenus grâce aux dispositions de l'invention. En cas de panne de verrouillage, selon EP-A 0.413.635 et dans certaines configurations particulières de hauteur de veine et de lignes aérodynamiques correspondantes, les efforts P1 résultant de la pression de veine sur la porte et l'action F1 du panneau amont sur la porte peuvent amener un couple P3 qui a un effet d'auto-ouverture sur la porte 7, comme représenté sur la figure 1. Par suite des dispositions de l'invention, au contraire, les efforts résultant de la pression de veine s'exerçant sur le panneau amont 20 tendent par l'intermédiaire du pignon 33 à entraîner la porte 7 dans le sens de la fermeture et le couple P3 résultant de cette action du panneau sur la porte et des efforts exercés par la pression de veine sur la porte 7 tend à fermer la porte 7. En jet direct, tout risque de déploiement intempestif de la porte 7 se trouve par conséquent écarté et la position fermée de la porte 7 devient une position stable grâce aux dispositions de moyens de liaison entre le panneau amont 20 et la porte 7 conformes à l'invention. Les dispositions de montage du panneau amont 20 sur l'axe de pivot 27 commun à la porte 7 permettent en outre une réduction du nombre de pièces utilisées.

La position du panneau amont 20 en jet inversé, telle que visible sur la figure 4 permet de masquer une zone morte 37 de recirculation du flux améliorant ainsi les performances et notamment le coefficient de débit.

La position intermédiaire du panneau amont 20 et de la porte 7 montrée sur la figure 7, lors du passage vers la position de jet inversé facilite les conditions transitoires et évite les inconvénients créés à ce stade par la solution selon EP-A-0.413.635.

L'étanchéité du panneau amont 20 obtenue grâce aux joints 26 d'une part, à l'avant sur la partie fixe amont 1 et, d'autre part à l'arrière, sur la porte 7 est plus simple à réaliser car comme le montre la figure 3 et le détail de la figure 8, le joint est disposé d'un seul côté du panneau amont 20 alors qu'au contraire, comme visible sur la figure 1, selon EP-A-0.413.635, les joints sont disposés d'un côté et d'autre du panneau amont 20.

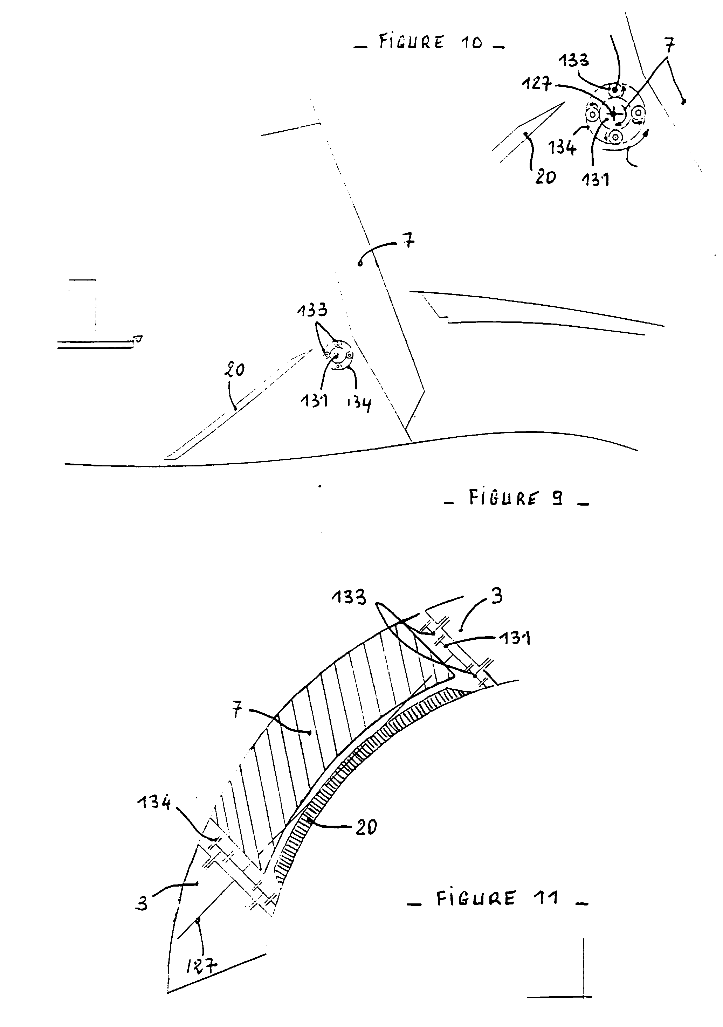

Les figures 9 à 11 montrent une variante de réalisation des moyens de liaison entre la porte 7 et le panneau amont 20 conformes à l'invention. Dans ce cas, le dispositif à engrenage épicycloïdal constituant lesdits moyens de liaison est monté directement sur l'axe de pivot 127 de la porte 7. Le dispositif est composé de pignons libres 133, par exemple au nombre de quatre dans la réalisation représentée sur les dessins, disposés entre d'une part, un élément denté sous forme de pignon planétaire 131 solidaire de la porte 7 sur l'axe de pivot 127 de porte et d'autre part, une couronne dentée 134 solidaire du panneau amont 20. L'aménagement est dans ce cas simplifié du fait que le bras support 32 solidaire de la structure fixe et portant les pignons libres du train épicycloïdal peut être supprimé.

En fonction des applications particulières, il peut également être avantageux de remplacer l'actionneur linéaire tel que le vérin 8 précédemment décrit pour obtenir les déplacements des éléments mobiles de l'inverseur par un actionneur rotatif, non représenté sur les dessins, directement solidarisé au pignon de liaison entre la porte 7 et le panneau amont 20.

## Revendications

1. Inverseur de poussée de turboréacteur à double flux comportant des portes pivotantes (7) susceptibles, en position fermée, lors d'un fonctionnement en jet direct, de s'intégrer dans la paroi extérieure de nacelle et susceptibles en outre de pivoter au moyen d'un actionneur (8) de commande des déplacements de manière à constituer des obstacles de déviation de flux lors d'un fonctionnement en inversion de poussée, chaque porte (7) étant doublée sur sa face interne par un panneau amont interne (20) relié à ladite porte (7) par des moyens de liaison caractérisé en ce que le panneau amont (20) est articulé sur le même pivot (27) que la porte (7), porté par la structure fixe de l'inverseur et les moyens de liaison entre ladite porte (7) et ledit panneau amont (20) comportent un ensemble à train d'engrenage épicycloïdal composé d'un élément denté (31 ; 131) solidaire de la porte (7), constituant le planétaire, d'une couronne dentée (34 ; 134) extérieure, solidaire du panneau amont (20) et d'au moins un pignon (33 ; 133) libre en rotation, solidaire de la structure fixe de l'inverseur et constituant le satellite entre le planétaire et la couronne extérieure de manière que lors du passage de la position de jet direct à la position de jet inversé, la rotation de la porte (7) et du panneau amont (20) respectivement autour du pivot commun (27) et sous l'action du moyen de commande (8) des déplacements se fait dans des sens opposés.

2. Inverseur de poussée de turboréacteur à double flux selon la revendication 1 dans lequel dans les moyens de liaison entre la porte (7) et le panneau amont (20), le planétaire est constitué par un secteur denté (31) solidaire de la porte (7), le pignon libre (33) est monté sur un bras support (32) solidaire de la structure fixe (3) de l'inverseur et disposé dans un logement (30) ménagé sur la porte (7) et la couronne dentée extérieure (34) est ménagée sur un support (35) solidaire de l'extrémité aval (36) du panneau amont (20).

3. Inverseur de poussée de turboréacteur à double flux selon la revendication 1 dans lequel dans les moyens de liaison entre la porte (7) et le panneau amont (20), plusieurs pignons libres (133) sont disposés entre un pignon planétaire (131) solidaire de la porte (7) sur l'axe de pivot (127) de porte et une couronne dentée (134) solidaire du panneau amont (20).

4. Inverseur de poussée de turboréacteur à double flux selon l'une quelconque des revendications 1 à 3 dans lequel le moyen de commande des déplacements des éléments mobiles de l'inverseur est constitué par un actionneur rotatif directement solidarisé au pignon de liaison entre la porte (7) et le panneau amont (20).

## Patentansprüche

1. Schubumkehrvorrichtung für ein Zweikreis-TL-Triebwerk, die Schwenkklappen (7) aufweist, welche geeignet sind, sich in geschlossener Stellung im Direktstrahlbetrieb in die Gondel-Außenwand einzufügen, und ferner geeignet sind, mittels eines Betätigungselements (8) zur Steuerung von Bewegungen dergestalt zu schwenken, dass sie im Schubumkehrbetrieb Umlenkhindernisse bilden, wobei jede Klappe (7) an ihrer Innenseite durch eine innere, Vorplatte (20) verdoppelt wird, die mit dieser Klappe (7) durch Verbindungsmittel verbunden ist,
**dadurch gekennzeichnet, dass** die Vorplatte (20) an dem gleichen, an dem festen Aufbau der Schubumkehrvorrichtung sitzenden Drehzapfen (27) angelenkt ist wie die Klappe, und dass die Verbindungsmittel zwischen dieser Klappe (7) und dieser Vorplatte (20) aus einer Gesamtanordnung mit einem Umlaufgetriebe bestehen, das sich aus einem mit der Klappe (7) fest verbundenen Zahnelement (31; 131) als Zentralrad, einem außenliegenden Zahnkranz (34; 134), der mit der Vorplatte (20) fest verbunden ist, und mindestens einem Freilaufritzel (33; 133), das mit dem festen Aufbau der Schubumkehrvorrichtung fest verbunden ist und das Planetenrad zwischen dem Zentralrad und dem Außenkranz bildet, zusammensetzt, so dass bei dem Wechsel von der Direktstrahlstellung zu der Schubumkehrstellung das unter Einwirkung des Bewegungssteuerungsmittels erfolgende Schwenken der Klappe (7) und der Vorplatte (20) um den gemeinsamen Drehzapfen (27) in entgegengesetzte Richtungen erfolgt.

2. Schubumkehrvorrichtung für ein Zweikreis-TL-Triebwerk nach Anspruch 1, wobei bei den Verbindungsmitteln zwischen der Klappe (7) und der Vorplatte (20) das Zentralrad von einem gezahnten Bogenstück (31) gebildet wird, das fest mit der Klappe (7) verbunden ist, das Freilaufritzel (33) an einem Tragarm (32) sitzt, der mit dem festen Aufbau (3) der Schubumkehrvorrichtung fest verbunden ist und in einer an der Klappe (7) vorgesehenen Aufnahme 30 angeordnet ist, und der äußere Zahnkranz (34) an einer Halterung (35) ausgeführt ist, die mit dem hinteren Ende (36) der Vorplatte (20) fest verbunden ist.

3. Schubumkehrvorrichtung für ein Zweikreis-TL-Triebwerk nach Anspruch 1, wobei bei den Verbindungsmitteln zwischen der Klappe (7) und der Vorplatte (20) mehrere Freilaufritzel (133) zwischen einem Zentralrad (131), das mit der Klappe (7) auf der Klappendrehachse (127) fest verbunden ist, und einem Zahnkranz (134), der mit der Vorplatte (20) fest verbunden ist, angeordnet sind.

4. Schubumkehrvorrichtung für ein Zweikreis-TL-Triebwerk nach einem der Ansprüche 1 bis 3, wobei das Steuermittel für die Bewegungen der beweglichen Teile der Schubumkehrvorrichtung aus einem drehenden Betätigungselement besteht, das direkt mit dem Verbindungsritzel zwischen der Klappe (7) und der Vorplatte (20) fest verbunden ist.

## Claims

1. A bypass jet engine thrust reverser comprising pivoting doors (7) adapted, when in the closed position in forward thrust operation, to be incorporated in the nacelle outer wall and to be pivoted by means of a movement-controlling actuator (8) so as to form flow-diverting obstacles in reverse thrust operation, each door (7) being paired on its inside surface with an internal upstream panel (20) connected to the door (7) by connecting means, characterised in that the upstream panel (20) is hinged on the same pivot (27) as the door (7), the pivot being carried on the fixed structure of the reverser, and the connecting means between the door (7) and the upstream panel (20) comprise an epicyclic gear train consisting of a toothed element (31; 131) rigidly secured to the door (7) and forming the sun gear, an outer ring gear (34; 134) rigidly secured to the upstream panel (20) and at least one freely rotatable pinion (33; 133) rigidly secured to the fixed structure of the reverser and forming the planet gear between the sun gear and the outer ring gear so that in the changeover from the forward thrust position to the reverse thrust position the actuator (8) rotates the door (7) and the panel (20) to opposite hands around the common pivot (27).

2. A bypass jet engine thrust reverser according to claim 1, wherein in the connecting means between the door (7) and the upstream panel (20) the sun gear takes the form of a toothed sector (31) rigidly secured to the door ( 7), the free pinion (33) is mounted on a support arm (32) rigidly secured to the fixed structure (3) of the reverser and disposed in a recess (30) in the door (7), and the annulus (34) is disposed on a support (35) rigidly secured to the downstream end (36) of the upstream panel (20).

3. A bypass jet engine thrust reverser according to claim 1, wherein in the connecting means between the door (7) and the upstream panel (20) a number of free pinions (133) are disposed between a sun gear (131) rigidly secured to the door (7) on the door hinge pivot (127) and an outer ring gear toothed annulus (134) rigidly secured to the upstream panel (20).

4. A bypass jet engine thrust reverser according to any of claims 1 to 3, wherein the means for controlling the movements of the movable elements of the reverser comprise a rotary actuator rigidly secured to the connecting pinion between the door (7) and the upstream panel (20).
